# EUROPEAN PATENT APPLICATION

(11) **EP 4 332 504 A1**
(43) Date of publication of application: **06.03.2024**
(21) Application number: 23194965.2
(22) Date of filing: 01.09.2023
(51) Int. Cl.: G01C 21/20, G01C 22/02, G05D 1/02, G01C 21/16

(54) **METHOD AND SYSTEM FOR LOCATING IN REAL TIME A VEHICLE MOVABLE IN AN OPERATING SPACE**

(30) Priority: 02.09.2022 IT 202200018075
(71) Applicant: Kiwitron S.r.l., 40037 Sasso Marconi (BO) (IT)
(72) Inventor: PETRELLI, Carlo, 40010 SALA BOLOGNESE (BOLOGNA) (IT); PARAZZA, Daniele, 41055 MONTESE (MODENA) (IT); FILIPPINI, Andrea, 40037 SASSO MARCONI (BOLOGNA) (IT); PREVITERA, Luca, 40132 BOLOGNA (IT)
(74) Representative: Scipioni, Luca

(57) **Abstract**

Described is a method for locating in real time a vehicle (1) movable in an operating space (2), comprising the following steps:
- receiving movement data representing a movement of the vehicle (1) in the operating space (2);
- deriving a route (3) travelled by the vehicle (1) inside the operating space (2) starting from the movement data, using odometry techniques;
- receiving reference image data, representing images in which one or more reference objects (5) are included;
- receiving configuration data, representing predetermined positions inside the operating space (2) in which the reference objects (5) are placed;
- estimating in real time an operating position (7) of the vehicle (1) inside the operating space (2), on the basis of the movement data, the reference image data and the configuration data.

## Description

The invention relates to a method and a system for locating in real time a vehicle movable in an operating space.

The invention also relates to an industrial warehouse provided with the above-mentioned system and a computer program for performing the above-mentioned method.

This invention applies to the sector of industrial logistics.

In the industrial logistics sector it is important to know the path followed by industrial vehicles, for example those designed for transporting packages or other materials, in order to better optimise the movements and the deliveries to be completed inside the warehouse.

In particular, it is important to know the exact position of the vehicle or in any case have a very precise indication in real time of where the vehicle is inside the operating space defined by the warehouse.

There are currently prior art localisation methods which are based on the odometry technique. Odometry is a technique which makes it possible to estimate the position of a vehicle on wheels based on information coming from sensors which measure the space travelled (for example, the number of revolutions of the wheels) and the steering angle.

There are currently prior art methods which are based on the reading of data coming from a control unit of the vehicle.

However, the odometry techniques can have not insignificant errors which result in an incorrect knowledge of the position of the vehicle which could adversely affect the entire work plan of the day. Moreover, based on the receiving of the vehicle data, the localisation in real time of the vehicles requires an integration with the control unit of the vehicle, considerably reducing the flexibility of the localisation system.

In other words, these methods are currently not very flexible, not very efficient and may result in bottlenecks inside the warehouse or industrial plant, thus reducing the general production efficiency.

Solutions of methods and systems for locating a vehicle movable in an operating space in real time are known from the following prior art documents which, however, have the same drawbacks listed above: US2020210719A1, US2018322653A1 and US2020026304A1. Moreover, a similar but not very efficient system is illustrated in scientific article XP060128241, by Ecorchard Gael et al, relating to "Wearable camera-based human absolute localization in large warehouses"*.*

The aim of the invention is therefore to provide a method and a system (that is to say, a device) for locating in real time a vehicle movable in an operating space which are able to overcome the drawbacks of the prior art.

Said aim is achieved by the method and by the system for locating in real time a vehicle movable in an operating space comprising the technical features described in one or more of the appended claims. The dependent claims correspond to possible embodiments of the invention.

According to an aspect of the invention, a method is provided for locating in real time a vehicle movable in an operating space, comprising the following steps performed by a processor:
- receiving movement data representing a movement of the vehicle in the operating space;
- deriving a route travelled by the vehicle inside the operating space starting from the movement data, using odometry techniques;
- receiving reference image data, representing images in which one or more reference objects are included;
- receiving configuration data, representing predetermined positions inside the operating space, in which the reference objects are placed;
- estimating (that is to say, calculating, deriving) in real time an operating position of the vehicle inside the operating space, on the basis of the movement data, the image data and the configuration data.

According to an example, the method comprises a step of receiving an initial position, representing an initial position of the vehicle in the operating space.

According to an example, the step of estimating the position of the vehicle is performed on the basis of the initial position of the vehicle in the operating space.

According to an example, the movement data comprise movement image data, detected by an acquisition unit. The movement data represents a plurality of RGB images. In addition or alternatively, the movement data represent a distance of the objects positioned around the vehicle from the acquisition unit.

According to an example, the movement image data comprises a first group of image data, representing a plurality of RGB images, and a second group of image data, representing a plurality of depth images. According to an example, the step of deriving the route comprises determining a direction of travel, on the basis of the first group of image data. In addition or alternatively, the step of deriving the route comprises determining a movement value, on the basis of the second group of image data.

In other words, the movement value is determined on the basis of the measured distance of the vehicle from the objects around the vehicle whilst this is in transit. More specifically, the movement value is determined on the basis of a plurality of depth images.

This feature is very advantageous because it allows an estimation of how far the vehicle has moved without having any connection with the control unit of the vehicle. More specifically, this allows the device to be integrated with any industrial vehicle, following its calibration. Thus, in this way, no interface with the vehicle is necessary, which is very often not provided by the manufacturer of the industrial vehicle.

According to an example, the step of deriving the route comprises determining a direction of travel, on the basis of the first group of image data, and a movement value, on the basis of the second group of image data.

According to an embodiment, the determining of the direction of travel comprises a step of identifying references in said plurality of RGB images. The references are objects which can be recognised by the processor using object recognition systems. The references may be an upright, a crosspiece, a window, a graphic code, a QR Code, an Apriltag or any other object positioned in the operating space and the position of which relative to the vehicle changes with the movement of the vehicle. More specifically, the QR Codes or the Apriltags are primarily necessary to define a global reference but, since they are also objects captured by the RGB video camera, they can constitute references to determine the distance of forward movement. The plurality of RGB images is a succession of RGB images detected at respective detecting instants. For this reason, during the step of determining the direction of travel, the processor:
- determines a first position (a first point), representing a reference position, for example a transversal element or an object in the scene which can be identified, in a first RGB image;
- determines a second position (a second point), representing a position of the same reference in a second RGB image, after the first RGB image;
- determines the direction of movement on the basis of the first position and the second position (said first and second points), which determine a direction.

It should be noted that the method preferably determines the direction of movement not only on the basis of the first and second positions, but also of more than two positions (that is to say, a plurality of successive positions).

According to an embodiment, the determining of the movement value comprises a step of detecting the distance of a reference (feature) present in the operating space. The plurality of depth images is a succession of depth images detected at respective detection instants.

According to an embodiment, the method for determining the movement value and/or the direction of movement is performed with the following steps:
- identifying a first plurality of points, representing corresponding recognisable references inside a first image detected at a first detecting instant;
- for each point of said first plurality of points, determining two-dimensional coordinates by means of the RGB video camera and determining a distance (Z coordinate) by means of a depth sensor (depth video camera);
- identifying a second plurality of points, representing the same references recognised in the first image in a second image, detected at a second detecting instant;
- for each point of said second plurality of points, determining the two-dimensional coordinates using the RGB video camera;
- on the basis of the three-dimensional coordinates of the first plurality of points and on the basis of the two-dimensional coordinates of the second plurality of points, projecting into three-dimensional coordinates of the second plurality of points, of which the two-dimensional coordinates are known;
- on the basis of the depth of said second plurality of points, detected using the previous projection, and on the basis of the depth of said first plurality of points, calculation of the distance travelled and/or the rotation performed by the vehicle.

Preferably, the projection in three-dimensional coordinates of said second plurality of points is performed by a known algorithm for minimising the re-projection error.

Preferably, the number of points of the plurality of points is equal to 3 points, even more preferably 5 points.

According to an embodiment, the method comprises identifying the points in the image in positions proximal to opposite side walls of the image, to allow a reconstruction of the space which is the most truthful and increase the capacity for reconstruction of the environment.

It should be noted that this type of technology may be obtained both with an RGB video camera coupled to a depth sensor and with a single video camera (preferably stereo) in which the depth of each point of said first plurality of points is derived with algorithms for deriving the depth starting from a 2D image. However, the use of the single camera needs to have strong constraints in the environment, whilst the presence of the depth sensor makes it possible to be relatively independent of the constraints of the operating space.

It should be noted that, according to an embodiment, it is also possible to determine the movement value and/or the direction of movement by reconstructing the 3D coordinates for each of said first and second plurality of points. However, this option, although having some advantages, requires very onerous calculations and therefore a corresponding considerable computational power where the above-mentioned solutions allow adequate operation even with reduced computational powers.

In that way, the localisation system is independent of the data of the control unit and may therefore be integrated in a fast and flexible manner to any self-propelled vehicle.

Advantageously, the combination of the movement data, image data and configuration data allows the estimation of the position of the vehicle to be corrected in real time so as to accurately plan the subsequent operations of the vehicle in order to maintain a high level of efficiency in the warehouse.

According to another aspect of the invention, a system is provided for locating a vehicle in real time in an operating space, comprising a plurality of reference objects, each located in a respective predetermined position inside the entire operating space, an acquisition unit, connectable to the vehicle and configured for detecting the reference objects and a processing unit, programmed for performing the steps of the above-mentioned method.

According to an example, the plurality of reference objects comprises a first type of references, having a first dimension, and a second type of references, having a second dimension, greater than the first dimension. According to an example, at least one reference object of the first type of references comprises a respective first reference object and a respective second reference object, spaced from each other along a vertical direction. According to an example, each reference object of the first type of references has a square shape.

According to an example, each reference of the first type has a side less than 8 cm and wherein each reference object of the first type is spaced from the adjacent reference object by a predetermined distance, of less than 15 metres.

According to an example, the reference objects comprise reference objects of the Apriltag type.

According to an example, the reference objects include an information surface, which can be detected by the acquisition unit and wherein the information surface is an opaque surface.

According to an example, the acquisition unit comprises an RGB video camera, configured for detecting reference image data, representing images in which one or more reference objects are included, and for detecting first movement data, representing a direction of travel of the vehicle.

According to an example, the acquisition unit comprises a depth video camera, connected to the processing unit and configured for detecting second movement data, representing a movement value of the vehicle in the operating space.

According to a further aspect, an industrial warehouse is provided comprising an above-mentioned system, an industrial vehicle, to which is connected the acquisition unit of the system, an operating space, including one or more delimiting walls and wherein the industrial vehicle is movable, and a shelving unit, positioned inside the operating space and including one or more uprights.

According to an example, a first type of references of the plurality of reference objects is located on one or more uprights of the shelving unit. According to an example, a second type of references of the plurality of reference objects is located on one or more delimiting walls.

According to an example, the acquisition unit comprises an RGB video camera, configured for detecting the plurality of reference objects and oriented with an angle of between 20° and 90° relative to a direction of travel of the vehicle.

According to another aspect of the invention, a computer program is provided including instructions for performing the steps of the method according to the invention.

According to an embodiment, the computer program is stored at least in the processing unit.

Further features and advantages of the invention are more apparent in the non-limiting description which follows of an embodiment of a method and a system for locating in real time a vehicle movable in an operating space. The description is set out below with reference to the accompanying drawings which are provided solely for purposes of illustration without restricting the scope of the invention and in which:

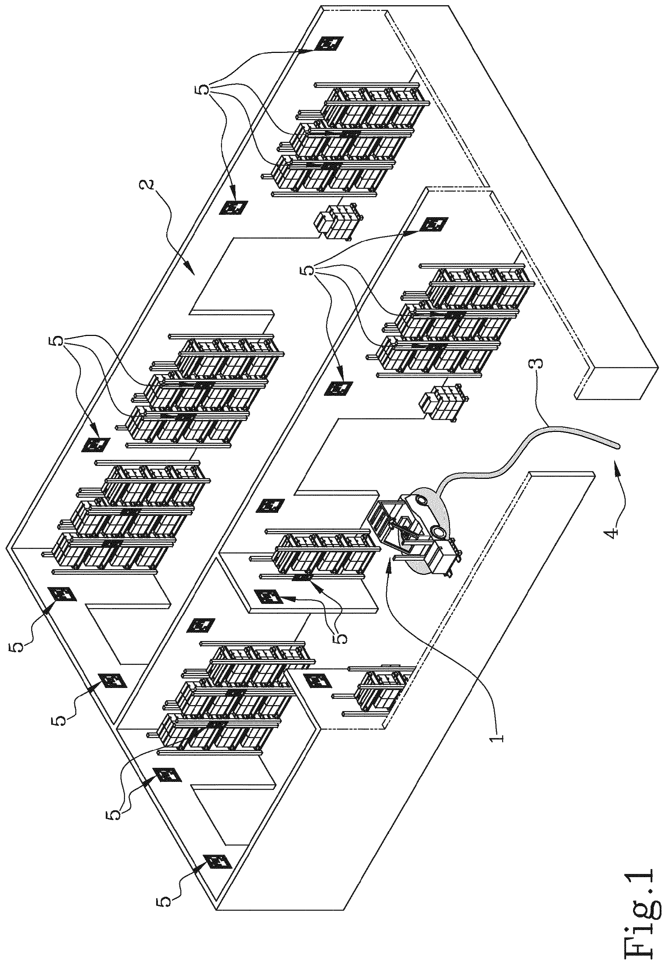

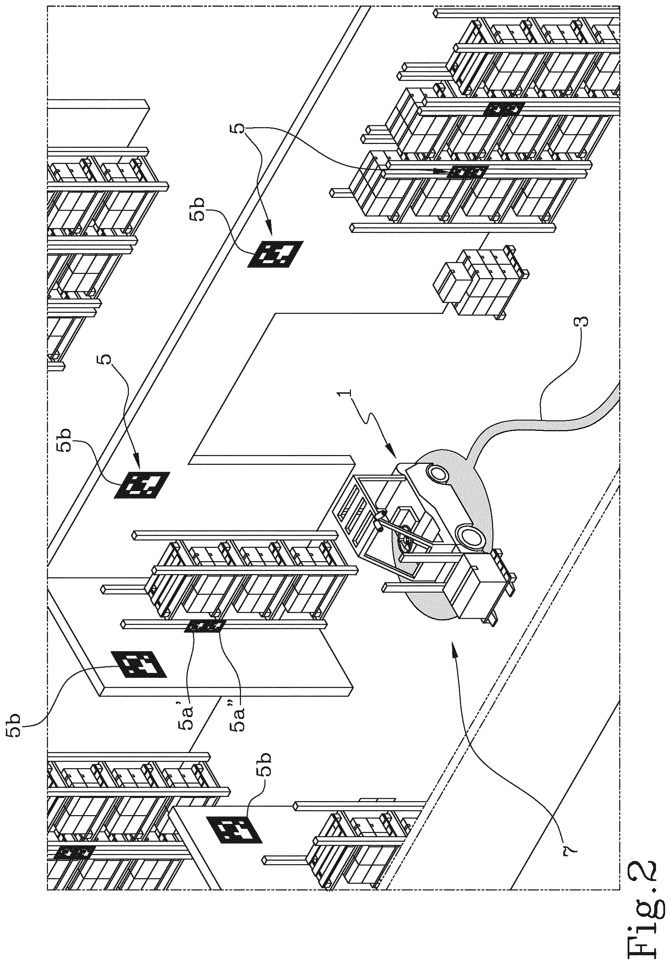

- Figures 1 and 2 show an example of the steps of the method according to the invention;
- Figure 3 shows a schematic example representation of the system according to the invention;

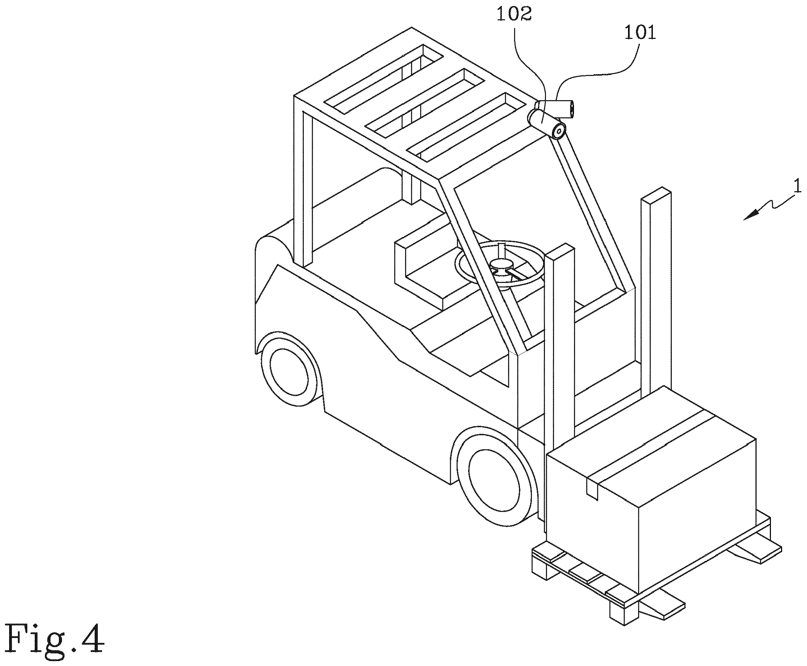

- Figure 4 shows a schematic representation of a vehicle movable in the operating space including an optical detection unit.

The invention relates to a method for locating in real time a vehicle 1 movable in an operating space 2.

The term operating space 2 may mean an industrial warehouse or an industrial plant or other environment containing products "P" to be transported inside the operating space 2.

The term product "P" is used to mean any finished product or component for making a finished product which can be produced and/or stored in an industrial plant or in a warehouse. Moreover, the term product "P" may mean in a generic manner the packages containing the above-mentioned finished products or components.

The method according to the invention comprises the steps, which are described in detail below, performed by a processor. In other words, the method is executed or can be executed by a processor or other similar device equipped with the above-mentioned processor.

The method comprises a first step of receiving movement data representing a movement of the vehicle 1 in the operating space 2. According to an example, the movement data may be obtained from an acquisition unit (not illustrated) which can be connected to the vehicle 1. According to an example, the movement data comprise movement image data, detected by the above-mentioned acquisition unit and representing at least a plurality of RGB images.

According to an example, the movement image data comprises a first group of image data, representing a plurality of RGB images, and a second group of image data, representing a plurality of depth images.

In other words, according to this embodiment the movement data are identifiable as images collected in succession by the acquisition unit. According to an example, the movement data can be obtained from a control unit of the vehicle 1.

In other words, according to this embodiment the movement data are identifiable as performance data regarding the speed or acceleration of the vehicle 1, the steering angle of the wheels and other information suitable for identifying or estimating the movement of the vehicle. For this reason, according to this embodiment the movement data is obtained by suitable sensors of the vehicle 1.

According to an example, the movement data can be a combination of the image data and performance data.

The method therefore comprises a step of deriving a route 3 travelled by the vehicle 1 inside the operating space 2 starting from the movement data. The derivation is obtained by odometry techniques.

According to an example, the step of deriving the route 3 comprises determining a direction of travel, on the basis of the first group of image data, and a movement value, on the basis of the first and second groups of image data.

In other words, according to the embodiment wherein the position data are image data, the route 3 is estimated on the basis of the RGB and depth images acquired by the acquisition unit which also allows the direction travelled by the vehicle 1 to be identified. In particular, points of interest are identified for each image (for example a window, a shelving unit 6 and/or a shelf or other similar items) and the respective points of interest are compared between one image and the other. In this way, with the aid of the RGB video camera 101 and depth video camera 102 it is possible to estimate the route 3 travelled and the direction of movement of the vehicle 1 inside the operating space 2.

According to an example, the method comprises a step of receiving an initial position 4, representing an initial position 4 of the vehicle 1 in the operating space 2.

According to an example, the step of deriving the route 3 travelled by the vehicle 1 is performed on the basis of the initial position 4 of the vehicle in the operating space 2. In particular, the knowledge of the initial position 4 allows a more precise estimation of the route 3 in these initial steps of the localisation method according to the invention.

The method also comprises a step of receiving reference image data, representing images in which one or more reference objects 5 are included.

The term reference objects 5 may mean markers located in the operating space 2 (for example on walls or shelving units 6 present in the operating space 2) which allow an overall reference system of the operating space 2 to be defined.

The method also comprises a step of receiving configuration data, representing predetermined positions inside the operating space 2 in which the reference objects 5 are placed. In other words, the configuration data represent the above-mentioned global reference system and are recorded or can be recorded in a suitable memory unit (to which the processor can access) in such a way that the processor can know where the reference objects 5 are located in the operating space 2.

According to an example, the reference objects 5 comprises a first type of references 5a, having a first dimension, and a second type of references 5b, having a second dimension, greater than the first dimension. According to an example, the reference objects 5 may have a square shape and the second type of references 5b has a side larger than the side of the first type of references 5a.

According to an example, at least one reference object 5 of the first type of references 5a comprises a respective first reference object 5a' and a respective second reference object 5a", positioned one above the surface along a vertical direction. According to an embodiment, the first reference object 5a' and the second reference object 5a" are spaced from each other along a vertical direction but in any case in a position such as to be detected simultaneously by the video camera.

The fact of having two references placed one above the other allows the problem of having a unique number of references for each area of the operating space to be resolved. In effect, in some circumstances, the unique references may not be sufficient to map the entire operating space. The use of two references combined vertically allows an exponential increase in the possible unique references which can be positioned in the operating space.

According to an example, as shown in the accompanying drawings, each reference object 5 of the first type of references 5a has a square shape.

According to an example, each reference of the first type has a side less than 8 cm (or equal to 8 cm) and wherein each reference object of the first type 5a is spaced from the adjacent reference object by a predetermined distance, of less than 15 metres.

According to an example, the predetermined distance of each reference object 5 of the first type of references 5a is defined by the uprights of a shelving unit 6 present in the operating space 2.

According to an example, the second type of references 5b also has a square shape.

According to an example, the second type of references 5b of the plurality of reference objects 5 is located on one or more walls delimiting the operating space 2.

According to an example, the reference objects 5 comprise reference objects of the Apriltag type.

According to an example, the reference objects 5 include an information surface.

At this point, the method comprises estimating in real time an operating position 7 of the vehicle 1 inside the operating space 2, on the basis of the movement data, the reference image data and the configuration data. Advantageously, the combination of the movement data, reference image data and configuration data allows the estimation of the position of the vehicle 1 to be corrected in real time so as to accurately plan the subsequent operations of the vehicle in order to maintain a high level of efficiency in the warehouse.

If there is the first reference object and the second reference object located one above the other along the vertical direction, the method makes it possible to obtain a more robust and precise estimate. Advantageously, the method described above makes it possible to significantly reduce the error of estimating the position of the vehicle 1 inside the operating space 2.

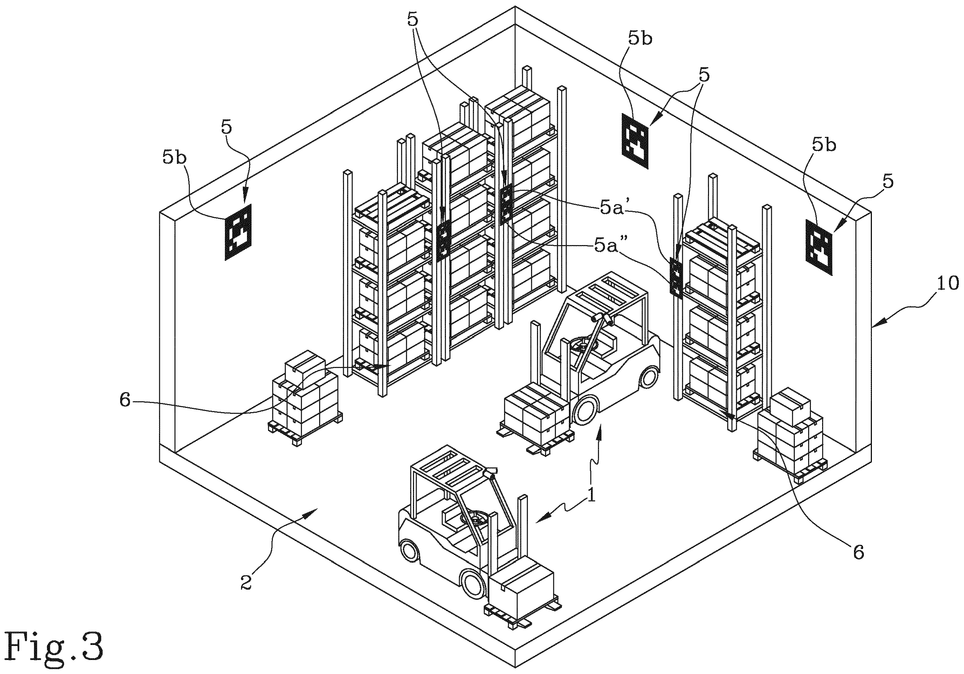

According to another aspect of this invention, a system 10 is provided (shown by way of an example in Figure 3) for locating a vehicle 1 in real time in an operating space 2, comprising a plurality of reference objects 5, each located in a respective predetermined position in the operating space 2.

According to an example, at least one reference object 5 of the first type of references 5a comprises a respective first reference object and a respective second reference object, spaced from each other along a vertical direction. In other words, the first reference object and the second reference object are located one above the other along the vertical direction.

According to an example, as shown in the accompanying drawings, each reference object 5 of the first type of references 5a has a square shape.

According to an example, each reference of the first type has a side less than 8 cm (or equal to 8 cm) and wherein each reference object of the first type 5a is spaced from the adjacent reference object by a predetermined distance, of less than 15 metres.

According to an example, the predetermined distance of each reference object 5 of the first type of references 5a is defined by the uprights of a shelving unit 6 present in the operating space 2.

According to an example, the second type of references 5b also has a square shape.

According to an example, a second type of references 5b of the plurality of reference objects 5 is located on one or more walls delimiting the operating space 2.

According to an example, the reference objects 5 comprise reference objects of the Apriltag type.

According to an example, the reference objects 5 include an information surface.

The system 10 also comprises an acquisition unit (not illustrated), connectable to the vehicle 1 and configured for detecting the reference objects 5.

According to an example, the information surface of the reference objects can be detected by the acquisition unit.

According to an example, the information surface is an opaque and therefore non-reflective surface in such a way that the acquisition unit can read the reference object 5 correctly.

According to an example, the acquisition unit comprises an RGB video camera 101, configured for detecting reference image data, representing images in which one or more reference objects 5 are included, and for detecting first movement data, representing a direction of travel of the vehicle 1.

According to an example, the acquisition unit comprises a depth video camera 102, connected to the processing unit and configured for detecting second movement data, representing a movement value of the vehicle in the operating space.

The system 10 therefore comprises the processing unit, programmed for performing the steps of the above-mentioned method. The processing unit is connected or connectable to the acquisition unit either wirelessly or by direct connection (for example via LAN). If the processing unit is connected directly to the acquisition unit, the processing unit is located or can be located on the vehicle 1.

In other words, the processing unit receives the movement data and processes them for estimating the route 3.

Moreover, the processing unit receives the reference image data and the configuration data for estimating in real time the operating position 7 on the basis of the estimated route 3.

In other words, the processing unit comprises the processor which is able to perform the steps of the method according to the invention.

According to an example, the processing unit is connected or connectable to a control unit of the vehicle 1 for acquiring movement data of the vehicle 1. Also in this case, the processing unit is connected wirelessly to the control unit of the vehicle 1 or by direct connection. If the processing unit were connected directly to the control unit of the vehicle 1, it would also be connected directly to the acquisition unit.

According to another aspect of the invention, an industrial warehouse is provided comprising a system 10 as described above and at least one industrial vehicle 1, to which the acquisition unit of the system 10 is connected. According to an example, the processing unit is also connected to the vehicle 1. Alternatively, the processing unit is connected remotely to the vehicle 1 and/or to the acquisition unit.

According to an example, the acquisition unit comprises an RGB video camera 101, configured for detecting the plurality of reference objects 5 and oriented with an angle of between 20° and 90° relative to a direction of travel of the vehicle 1.

Again, according to an example, the RGB video camera 101 is oriented with an angle of between 75° and 80° relative to the direction of travel of the vehicle 1.

In this way, the acquisition unit (that is to say, the RGB video camera 101) is able to capture the reference objects 5 during the forward movement of the vehicle 1 along the path in the operating space 2.

The industrial warehouse also comprises an operating space 2, including one or more delimiting walls and in which the industrial vehicle 1 is movable.

According to an example, a second type of references 5b of the plurality of reference objects 5 is located on one or more walls delimiting the operating space 2.

The industrial warehouse also comprising a shelving unit 6, positioned inside the operating space 2 and including one or more uprights. According to an example, the first type of references 5a of the plurality of reference objects 5 is located on one or more uprights of the shelving unit. According to another aspect of the invention, a computer program is provided including instructions for performing the steps of the method according to the invention.

According to an embodiment, the processor program is stored at least in the processing unit or in a memory unit with which the processing unit, that is, the processor, can access.

Advantageously, the invention is able to overcome the drawbacks of the prior art.

Advantageously, the invention makes it possible to estimate in an optimum manner the operating position 7 of the vehicle 1 inside the operating space 2.

Advantageously, the estimation error is reduced significantly so as to be able to effectively coordinate the actions which can be performed by one or more industrial vehicles 1 inside the operating space 2. Advantageously, the invention makes it possible to strengthen the known odometry techniques in order to obtain more precise results.

## Claims

1. A method for locating in real time a vehicle (1) movable in an operating space (2), comprising the following steps performed by a processor:
- receiving movement data representing a movement of said vehicle (1) in said operating space (2);
- deriving a route (3) travelled by said vehicle (1) inside the operating space (2) starting from said movement data, using odometry techniques;
- receiving reference image data, representing images in which one or more reference objects (5) are included;
- receiving configuration data, representing predetermined positions inside the operating space (2) in which said reference objects (5) are placed;
- estimating in real time an operating position (7) of the vehicle (1) inside said operating space (2), on the basis of the movement data, the reference image data and the configuration data.

2. The method according to claim 1, comprising a step of receiving an initial position (4), representing an initial position (4) of the vehicle (1) in the operating space (2) and wherein said step of deriving the route (3) travelled by the vehicle is carried out on the basis of the initial position of said vehicle (1) in said operating space (2).

3. The method according to claim 1 or 2, wherein said movement data comprises movement image data, detected by an acquisition unit and at least representing a plurality of RGB images.

4. The method according to claim 3, wherein said movement image data comprises a first group of image data, representing a plurality of RGB images, and a second group of image data, representing a plurality of depth images.

5. The method according to claim 4, wherein the step of deriving the route (3) comprises determining a direction of travel, on the basis of the first group of image data, and a movement value, on the basis of the second group of image data and of the first group of image data.

6. A computer program including instructions for performing the steps of the method according to any one of the preceding claims.

7. A system (10) for locating a vehicle in real time in an operating space, comprising:
- a plurality of reference objects (5), each placed in a respective predetermined position inside said operating space (2);
- an acquisition unit, connectable to the vehicle (1) and configured for detecting the reference objects (5) of said plurality;
- a processing unit, programmed for performing the steps of the method according to any one of claims 1 to 5.

8. The system (10) according to claim 7, wherein said plurality of reference objects (5) comprises a first type of references (5a), having a first dimension, and a second type of references (5b), having a second dimension, greater than the first dimension.

9. The system (10) according to claim 8, wherein at least one reference object (5) of said first type of references (5a) comprises a respective first reference object and a respective second reference object, spaced from each other along a vertical direction.

10. The system (10) according to claim 8 or 9, wherein each reference object (5) of said first type of references (5a) has a square shape; according to an example each reference of said first type having a side less than 8 cm and wherein each reference object (5) of said first type (5a) is spaced from the adjacent reference object (5) by a predetermined distance, less than 15 metres.

11. The system (10) according to any one of claims 7 to 10, wherein said reference objects (5) include an information surface, which can be detected by the acquisition unit and wherein said information surface is an opaque surface.

12. The system (10) according to any one of claims 7 to 11, wherein the acquisition unit comprises an RGB video camera (101), configured for detecting reference image data, representing images in which one or more reference objects (5) are included, and for detecting first movement data, representing a direction of travel of the vehicle.

13. The system (10) according to claim 12, wherein the acquisition unit comprises a depth video camera (102), connected to said processing unit and configured for detecting second movement data, representing a movement value of the vehicle (1) in the operating space (2).

14. An industrial warehouse, comprising:
- a system (10) according to any one of claims 8 to 13;
- an industrial vehicle (1), to which is connected the acquisition unit of the system (10);
- an operating space (2), including one or more delimiting walls and in which the industrial vehicle (1) is movable;
- a shelving unit (6), positioned inside the operating space (2) and including one or more uprights.

15. The warehouse according to claim 14, wherein a first type of references (5a) of said plurality of reference objects (5) is placed on said one or more uprights of the shelving unit (6), and wherein a second type of references (5b) of said plurality of reference objects (5) is placed on said one or more delimiting walls.
